# EUROPÄISCHE PATENTSCHRIFT

(11) **EP 0 340 386 B1**
(45) Veröffentlichungstag und Bekanntmachung des Hinweises auf die Patenterteilung: **04.08.1993**
(21) Anmeldenummer: 89101076.1
(22) Anmeldetag: 23.01.1989
(51) Int. Cl.: B62B 3/10

(54) **Einkaufswagen zum Befördern von in Baumärkten erhältlichen Artikeln**
Shopping trolley for transporting articles available at DIY supermarkets
Chariot d'achat pour transporter des articles en vente aux marchés du bâtiment

(30) Priorität: 26.01.1988 DE 8800854 U; 09.04.1988 DE 3811906; 20.04.1988 DE 3813247; 21.04.1988 DE 8805282 U
(43) Veröffentlichungstag der Anmeldung: 08.11.1989
(73) Patentinhaber: WANZL METALLWARENFABRIK GMBH, D-89340 Leipheim (DE)
(72) Erfinder: Eberlein, Herbert, D-8871 Bubesheim (DE); Wanzl, Rudolf, D-8874 Leipheim (DE)

(56) Entgegenhaltungen:
- EP-A- 0 062 566
- DE-A- 3 431 402
- DE-U- 7 533 385
- DE-U- 8 815 152
- FR-A- 2 470 719

## Beschreibung

Die Erfindung betrifft einen Einkaufswagen zum Befördern von in Baumärkten erhältlichen Artikeln, wie Platten, Behälter, Tapetenrollen und dgl., bestehend aus einem Fahrgestell und einem auf dem Fahrgestell angeordneten Korb, mit einer Schiebeeinrichtung und mit einer an einer Längsseite des Einkaufswagens angeordneten, mit einem seitlich nach oben ragenden Anschlag ausgestatteten Ablage zur bevorzugten Aufnahme von plattenförmigem Gut, das in einer in Schieberichtung geneigten Lage sowohl an der Ablage, die eine erste Auflagestelle bildet, als auch an einer zweiten Auflagestelle aufliegt, die sich am vorderen Ende des Fahrgestells befindet.

Durch das deutsche Gebrauchsmuster G 75 33 385 ist ein derartiger Einkaufswagen bekannt. Dieser Einkaufswagen weist an mindestens einer seiner beiden Längsseiten eine Ablage auf, die zusammen mit einem Bügel, der an einem den Korb tragenden aufrechten Seitenrahmen angeordnet ist, ein Fach bildet. Am vorderen Ende des Fahrgestells sind quer und längs zur Schieberichtung verlaufende Anschläge angeordnet. Durch diese konstruktive Maßnahme ist es möglich, plattenförmiges Material in das neben dem Korb angeordnete Fach hochkant zu legen, wobei das plattenförmige Material an der Ablage und an einer im vorderen Bereich befindlichen Querverbindung aufliegt und durch den Bügel und die Anschläge in seiner Lage gehalten wird.

Die Aufgabe der Erfindung besteht darin, einen Einkaufswagen der gattungsmäßigen Art so weiterzuentwickeln, daß mit ihm platten- und stabförmiges Gut auch auf einem geneigten Fahrsteig transportierbar ist.

Die Lösung der Aufgabe besteht darin, daß die zweite Auflagestelle durch eine wannenförmige Vertiefung gebildet ist.

Der besondere Vorteil der Erfindung besteht darin, daß die wannenförmige Vertiefung, die aus engmaschigem Gitterdraht, oder aus Blech oder aus Kunststoff gefertigt sein kann, die Funktion eines Köchers übernimmt, in den ein Teil des Endes des platten- oder stabförmigen Gutes einfügbar ist. Die genannte Köcherfunktion ist äußerst wichtig, da das platten- oder lattenförmige Gut nicht nur in der Ebene, sondern z.B. auch auf einem geneigten Fahrsteig sicher transportierbar sein muß. Die wannenförmige Vertiefung verhindert, daß sich beispielsweise beim Überfahren eines am Fahrsteig befindlichen Kammes, durch den sich zwangsläufig ergebenden Stoß, das platten- oder lattenförmige Gut von seiner vorderen Auflagestelle löst und mit dem vorderen Ende zu Boden rutscht. Dieser Effekt könnte fatale Folgen dann auslösen, wenn das platten-oder lattenförmige Gut am Kamm eines Fahrsteiges hängen bliebe, während der Einkaufswagen durch des laufende Transportband weitertransportiert werden würde. Die wannenförmige Vertiefung ist daher in zweckmäßiger Weise so gestaltet, daß stabförmiges Gut nicht durch Zwischenräume nach vorne hindurchrutschen kann.

Bei einem bevorzugten Ausführungsbeispiel ist die wannenförmige Vertiefung ein Behälter, der die vordere Breite des Fahrgestelles durchmißt und dessen in Schieberichtung gemessene Tiefe dem Stapeltotraum entspricht, der an zwei ineinandergeschobenen Einkaufswagen sichtbar ist. Die wannenförmige Vertiefung bildet sowohl die vordere Auflagestelle für platten- oder lattenförmiges Gut, als auch eine Stellfläche für kürzeres stab- oder rollenförmiges Material, beispielsweise Tapetenrollen, das aufrecht in die wannenförmige Vertiefung gestellt und von der Stirnseite des Korbes wegführenden geschlossenen Bügels allseitig begrenzt, gegen Umkippen gehalten ist.

Gemäß einer anderen bevorzugten Ausführungsform entspricht die Breite der wannenförmigen Vertiefung lediglich der Breite der seitlich am Fahrgestell und Korb befindlichen Ablage. Diese Ausführungsform erlaubt das Anbringen eines bekannten unterhalb des Korbes befindlichen großflächigen Bodenrostes.

Eine weitere Variante eines bevorzugten Ausführungsbeispieles besteht darin, daß der Boden der wannenförmigen Vertiefung tiefer als die obere Begrenzung des vorderen Bereiches des Fahrgestelles und dabei außerhalb des Schwenkbereiches der vorderen Fahrrollen liegt. Bei diesem Beispiel ist es in optimaler Weise möglich, sowohl eine wannenförmige Vertiefung vorzusehen, welche die gesamte Breite des vorderen Bereiches des Fahrgestelles einnimmt, als auch einen großflächigen Bodenrost anzuordnen, wobei sich beide beim platzsparenden Ineinanderschieben zweier Einkaufswagen nicht behindern.

Schließlich gehören bei einem ebenfalls bevorzugten Ausführungsbeispiel der Boden der wannenförmigen Vertiefung und die ebenfalls in Schieberichtung des Einkaufswagens geneigte Auflagestelle der Ablage einer gemeinsam geneigten Ebene an, so daß die hochkant abgestellten plattenförmigen Gegenstände satt, also flächig, sowohl an der Ablage als auch am Boden der wannenförmigen Vertiefung aufliegen, mit der Folge, daß an den plattenförmigen Gegenständen nur geringe Flächenpreßkräfte entstehen, die keine Druckstellen an diesen Gegenständen bewirken können.

Die Erfindung wird anhand von vier Ausführungsbeispielen näher erläutert. Es zeigt
- Fig. 1: anhand einer Prinzipskizze einen erfindungsmäßigen Einkaufswagen;
- Fig. 2: den in Fig. 1 dargestellten Einkaufswagen in einer Perspektivansicht;
- Fig. 3: das Fahrgestell eines Einkaufswagens mit einer kleinen wannenförmigen Vertiefung, sowie
- Fig. 4: einen Einkaufswagen, bei dem der Boden der wannenförmigen Vertiefung tiefer angeordnet ist, als die Auflagefläche des Bodenrostes und
- Fig. 5: einen Einkaufswagen, bei dem der Boden der wannenförmigen Vertiefung zur Schieberichtung des Ein kaufswagens hin geneigt ist.

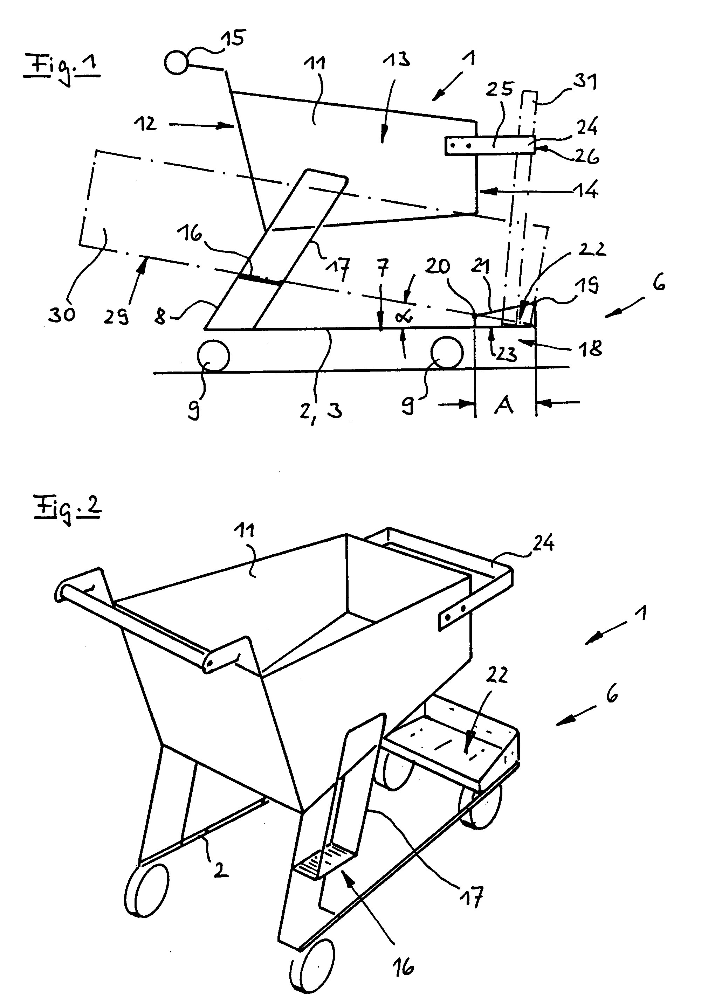

Der in Fig. 1 gezeichnete Einkaufswagen 1 ist schematisch dargestellt. Der Einkaufswagen 1 besteht aus einem in Fahrtrichtung sich verjüngenden Fahrgestell 2, das mit vier Fahrrollen 9 ausgestattet ist. In bekannter Weise führen seitlich am rückwärtigen Ende des Fahrgestelles je eine Strebe 8 nach oben. Die Streben 8 tragen einen ebenfalls in bekannter Weise konisch gestalteten Korb 11, dessen Rückwand 12 zum Zwecke des Ineinanderschiebens mehrerer Einkaufswagen 1 um eine oben liegende Achse in das Korbinnere verschwenkbar ist. Am rückwärtigen Ende des Korbes 11 ist eine Schiebeeinrichtung 15 angeordnet. Zumindest an einer Längsseite des Einkaufswagens 1 befindet sich eine vom Einkaufswagen 1 weggerichtete Ablage 16 mit daran in einem Abstand zum Korb 11 angeordneten, nach oben ragenden Anschlag 17, wie dies auch im deutschen Gebrauchsmuster G 75 33 385 ausreichend beschrieben ist. Das vordere Ende 6 des Fahrgestelles 2 ist in Schieberichtung des Einkaufswagens 1 betrachtet über das von der Stirnwand 14 des Korbes 11 gefällte Lot hinaus verlängert. In diesem durch das Maß A gekennzeichneten Abschnitt 18 befinden sich vier Anschläge 19, 20, 21, die höher angeordnet sind, als die obere Begrenzung 7 des Fahrgestellrahmens 3. Die Anschläge 19 und 20 sind quer zur Schieberichtung angeordnet, während durch die Bezugsziffer 21 zwei Anschläge gekennzeichnet sind, die in Schieberichtung verlaufen. Die Anschläge 19, 20, 21 sind die obere Begrenzung und damit Teil einer wannenförmigen Vertiefung 22, deren Boden 23 in Beispiel in etwa auf gleicher Höhe angeordnet ist, wie die obere Begrenzung 7 des Fahrgestellrahmens 3. Der zuvorderst plazierte Anschlag 19 ist höher angeordnet, als der parallel zu diesem verlaufende hintere Anschlag 20. An den beiden Korbseitenwänden 13 ist ein U-förmig gestalteter Bügel 24 oberhalb des mit dem Maß A gekennzeichneten Abschnittes 18 angeordnet. Die Stirnwand 14 des Korbes 11 sowie die Schenkel 25 und der Verbindungsabschnitt 26 des U-Bügels 24 bilden eine rechteckige Begrenzung für stab- und rollenförmiges Gut, beispielsweise für Tapetenrollen und dgl., wie dies in der Zeichnung durch die Bezugsziffer 31 dargestellt ist. Ebenfalls strichpunktiert gezeichnet ist ein plattenförmiger Gegenstand 30 dargestellt, der an der eine erste Auflagestelle bildende Ablage 16 und an der wannenförmigen Vertiefung 22 aufliegt, die als zweite Auflagestelle dient. Die Ablage 16 ist um ein wesentliches höher angeordnet, so daß, wie im Beispiel gezeigt, die untere geradlinige Kante 29 eines plattenförmigen Gegenstandes 30 eine Neigung in Schieberichtung von mindestens 10° , besser jedoch von mindestens α = 12° einnimmt. Die Wahl der eben genannten Neigungswinkel rührt daher, daß Fahrsteige, die sich zum Befördern von Einkaufswagen 1 eignen, eine maximale Neigung von 12° besitzen. Ist die Ablage 16 bei einem neuheitsgemäßen Einkaufswagen nun so hoch über der wannenförmigen Vertiefung 22 angeordnet, daß das auf die Ablage 16 und die wannenförmige Vertiefung 22 gestellte platten- oder lattenförmige Gut eine Neigung von 12° einnimmt, dann beträgt diese Neigung bei Aufwärtsfahrt des Einkaufswagens 1 auf dem Fahrsteig 0° und bei Abwärtsfahrt 24° . Man wird daher in sicherer und zweckmäßiger Weise die Ablage 16 so hoch anordnen, daß platten- und lattenförmiges Gut selbst bei Aufwärtsfahrt noch eine in Schieberichtung abfallende Neigung von wenigen Grad einnimmt, um jegliches Lösen dieses Gutes vom Einkaufswagen 1 zu verhindern. Als zweckmäßiger Winkel α wird beispielsweise 15° vorgeschlagen. Die zumindest mit einem Teil ihres Grundrisses nicht innerhalb des Korbgrundrisses, sondern vor einem von der Stirnwand 14 des Korbes 11 gefällten Lot befindliche wannenförmige Vertiefung 22 ist daher zweckmäßigerweise ein aus Blech und/oder aus Kunststoff oder aus engmaschigem Gitter gefertigter Behälter, der durch geeignete Befestigungsmittel wie Schrauben und Muttern, oder durch geeignete Befestigungsmethoden wie z.B. Schweißen am Fahrgestell 2 befestigt ist.

Ergänzend ist der in Fig. 1 beschriebene Einkaufswagen 1 in einer perspektivischen Darstellung gemäß Fig. 2 gezeichnet. Man erkennt in der Zeichnung das den Korb 11 tragende Fahrgestell 2 mit seitlich angeordneter Ablage 16 und Anschlag 17. Am vorderen Ende 6 des Fahrgestelles 2 ist die als Behälter gestaltete wannenförmige Vertiefung 22 befestigt. Die wannenförmige Vertiefung 22 ist in etwa gleich breit, wie die Breite des vorderen Endes 6 des Fahrgestelles 2. Über der wannenförmigen Vertiefung 22 ist der vom Korb 11 in Schieberichtung weisende U-Bügel 24 am Korb 11 befestigt. (Fig. 2)

In einer Draufsicht zeigt Fig. 3 das Fahrgestell 2 eines weiteren Ausführungsbeispiels. Im rückwärtigen Bereich des Fahrgestelles 2, im Beispiel rechts, sind die Ablage 16 und der Anschlag 17 angeordnet. Im Gegensatz zu dem in den Figuren 1 und 2 gezeigten Beispiel entspricht die Breite B der wannenförmigen Vertiefung 22 lediglich der Breite C der Ablage 16. Diese Ausführung hat den Vorteil, daß unabhängig von der Form der wannenförmigen Vertiefung 22 unterhalb des Korbes 11 auf dem Fahrgestellrahmen 3 ein Bodenrost 27 der üblichen Bauweise vorgesehen werden kann, so daß eine weitere Stellfläche für Einkaufsgut geschaffen ist. Die rückwärtige Breite B des Bodenrostes 27 darf jedoch nur so groß sein, daß die wannenförmige Vertiefung 22 eines rückwärtigen, in einen vorausbefindlichen Einkaufswagen 1 einzuschiebenden weiteren Einkaufswagen 1, nicht an den Bodenrost 27 anstößt.

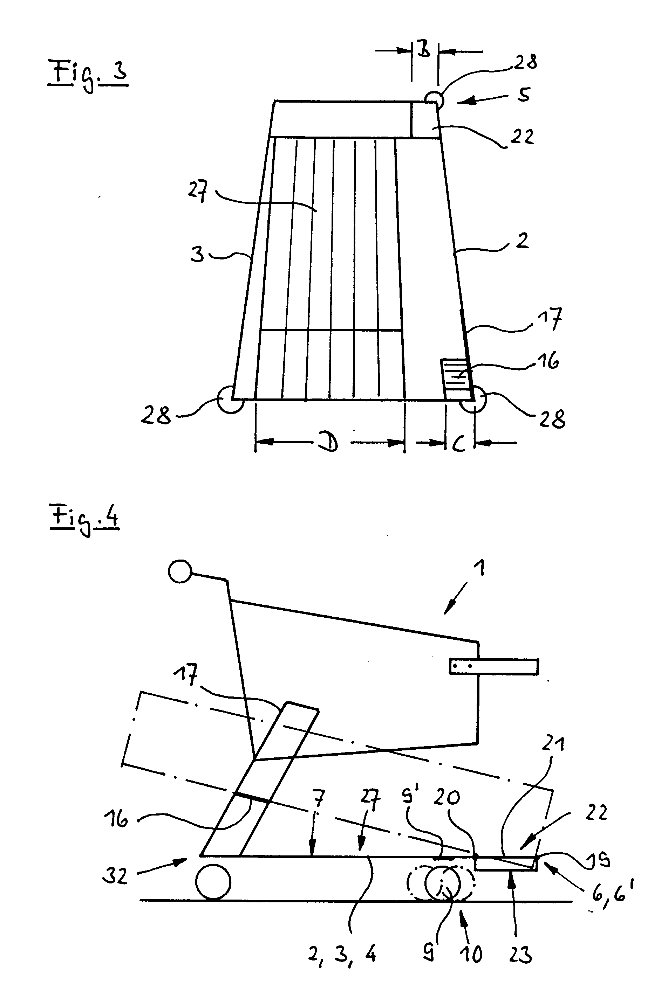

Der in Fig. 4 dargestellte Einkaufswagen 1 unterscheidet sich vom Ausführungsbeispiel der Fig. 1 lediglich darin, daß der Boden 23 der wannenförmigen Vertiefung 22 tiefer angeordnet ist, als die obere Begrenzung 7 des Fahrgestellrahmens 3 und daß die Anschläge 19, 20, 21 ebenfalls nicht über die obere Begrenzung 7 des Fahrgestellrahmens 3 hinausragen. Lage und Gestalt der wannenförmigen Vertiefung 22 sind so gewählt, daß die vorderen Fahrrollen 9, sollten sie als Lenkrollen ausgebildet sein, beim allseitigen Schwenkvorgang nicht an die wannenförmige Vertiefung 22 anstoßen. Die wannenförmige Vertiefung 22 ist also außerhalb des Schwenkbereiches 10 oder vorderen Fahrrollen 9 angeordnet und zwar im Beispiel zwischen dem die Fahrrollen 9 tragenden, die Seitenrahmen 4 verbindenden Querstück 9′ und der Querverbindung 6′ des vorderen Endes 6 des Fahrgestelles 2. Die eben beschriebene zweckmäßige Anordnung und Gestaltung der wannenförmigen Vertiefung 22 ermöglicht die Verwendung eines großflächigen Bodenrostes 27, der in seiner Breite nicht jene in Fig. 3 gezeigte maßliche Beschränkung (Maß D) in Kauf nehmen muß. Der Bodenrost 27 kann in seiner flächenmäßigen Erstreckung fast jene Fläche einnehmen, die im Grundriß des Fahrgestelles 2 betrachtet vom hinteren Anschlag 20 der wannenförmigen Vertiefung 22, der beiden Seitenrahmen 4 des Fahrgestelles 2 und einer gedachten, quer zur Schieberichtung sich erstreckenden Linie 32, mit welcher das rückwärtige Ende des Fahrgestelles 2 kennzeichenbar ist, eingeschlossen ist.

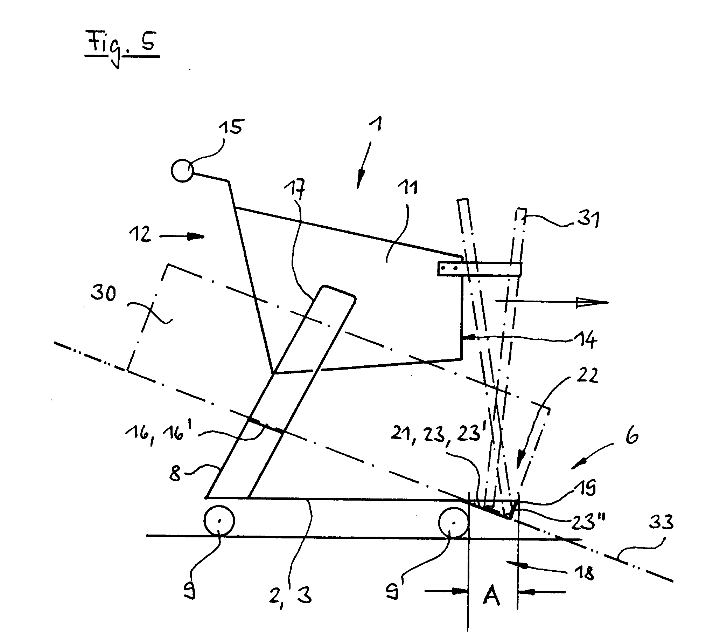

Der in Fig. 5 dargestellte Einkaufswagen 1 entspricht von seinem Grundaufbau her jenem Einkaufswagen, wie sie in den Figuren 1 bis 4 beschrieben sind. Neu bei diesem Ausführungsbeispiel ist, daß in dem durch das Maß A gekennzeichneten Bereich 18 des Fahrgestelles 2 der Boden 23 der wannenförmigen Vertiefung 22, die stirnseitig durch den Anschlag 19 und an den Längsseiten des Fahrgestelles 2 durch die Anschläge 21, welche bevorzugt durch den Fahrgestellrahmen 3 nach oben hin begrenzt ist, in Schieberichtung (siehe Pfeil) des Einkaufswagens 1 hin geneigt, also nach vorne abfallend angeordnet ist. Die Neigung des Bodens 23 entspricht der Neigung der Ablage 16, wobei sich der Boden 23 und die durch die Ablage 16 gebildete Auflagefläche 16′ auf einer gemeinsamen Ebene 33 befinden. Zweckmäßigerweise ist der Boden 23 der wannenförmigen Vertiefung 22 durch ein rechtwinklig abgebogenes Blech gebildet, bei dem der in der Zeichnung ersichtliche längere Abschnitt 23′ die Auflagefläche und der kürzere schräg nach oben ragende Abschnitt 23'' den vorderen Anschlag 19 für abzustellendes Gut 30, 31 bilden. Anstelle eines Bleches kann auch ein winklig abgebogener engmaschiger Gitterrost oder ein entsprechend geformtes Kunststoffteil treten. Das Blech, der Gitterrost oder des Kunststoffteil durchmessen üblicherweise die Breite des vorderen Bereiches 18 des Fahrgestelles 2.

Neben hinteren Abweisrollen 28, wie in Fig, 3 gezeigt, ist es zweckmäßig, auf der Seite der Ablage 16, am vorderen Eckbereich 5 des Fahrgestelles 2 eine über den Grundriß des Fahrgestelles 2 hinausreichende weitere Abweisrolle 28 oder ein starres Abweisteil aus Kunststoff vorzusehen, um zu vermeiden, daß beim Befahren eines Fahrsteiges der vordere Eckbereich 5 des Fahrgestelles 2 eine Beschädigung der Ballustraden des Fahrsteiges bewirkt.

## Patentansprüche

1. Einkaufswagen (1) zum Befördern von in Baumärkten erhältlichen Artikeln, wie Platten, Behälter, Tapetenrollen und dgl., bestehend aus einem Fahrgestell (2) und einem auf dem Fahrgestell (2) angeordneten Korb (11), mit einer Schiebeeinrichtung (15) und mit einer an einer Längsseite des Einkaufswagens (1) angeordneten, mit einem seitlich nach oben ragenden Anschlag (17) ausgestatteten Ablage (16) zur bevorzugten Aufnahme von plattenförmigem Gut, das in einer in Schieberichtung geneigten Lage sowohl an der Ablage (16), die eine erste Auflagestelle bildet, als auch an einer zweiten Auflagestelle aufliegt, die sich am vorderen Ende (6) des Fahrgestelles (2) befindet, dadurch **gekennzeichnet**, daß die zweite Auflagestelle durch eine wannenförmige Vertiefung (22) gebildet ist.

2. Einkaufswagen nach Anspruch 1, dadurch **gekennzeichnet**, daß der Boden (23) der wannenförmigen Vertiefung (22) zur Schieberichtung des Einkaufswagens (1) hin eine geneigte Lage einnimmt.

3. Einkaufswagen nach Anspruch 2, dadurch **gekennzeichnet**, daß die Auflagefläche (16') der Ablage (16) und der Boden (23) der wannenförmigen Vertiefung (22) einer gemeinsamen Ebene (33) angehören.

4. Einkaufswagen nach Anspruch 2, dadurch **gekennzeichnet**, daß der Boden (23) als rechtwinkliges Gebilde gestaltet ist, wobei der nach vorne geneigte Abschnitt (23') eine Auflagefläche und der schräg nach oben ragende Abschnitt (23'') einen vorderen Anschlag (19) für abzustellendes Gut (30, 31) bilden.

5. Einkaufswagen nach einem der Ansprüche 1 bis 4, dadurch **gekennzeichnet,** daß ein Teil der wannenförmigen Vertiefung (22) durch Anschläge (19, 20, 21) gebildet ist.

6. Einkaufswagen nach einem der Ansprüche 1 bis 5, dadurch **gekennzeichnet,** daß der vordere Anschlag (19) höher angeordnet ist, als der hintere Anschlag (20).

7. Einkaufswagen nach einem der Ansprüche 1 bis 6, dadurch **gekennzeichnet,** daß der vordere und hintere Anschlag (19, 20) entweder höher oder gleich hoch wie die obere Begrenzung (7) des Fahrgestellrahmens (3) angeordnet sind.

8. Einkaufswagen nach einem der Ansprüche 1 bis 7, dadurch **gekennzeichnet,** daß der Boden (23) der wannenförmigen Vertiefung (22) tiefer angeordnet ist, als die obere Begrenzung (7) des Fahrgestellrahmens (3).

9. Einkaufswagen nach einem der Ansprüche 1 bis 8, dadurch **gekennzeichnet,** daß die wannenförmige Vertiefung (22) außerhalb des Schwenkbereiches (10) der vorderen Fahrrollen (9) angeordnet ist.

10. Einkaufswagen nach einem der Ansprüche 1 bis 9, dadurch **gekennzeichnet,** daß die wannenförmige Vertiefung (22) zwischen dem die vorderen Fahrrollen (9) tragenden Querstück (9′) und der Querverbindung (6′) des vorderen Endes (6) des Fahrgestelles (2) angeordnet ist.

11. Einkaufswagen nach einem der Ansprüche 1 bis 10, dadurch **gekennzeichnet,** daß die wannenförmige Vertiefung (22) zumindest mit einem Teil ihres Grundrisses nicht innerhalb des Korbgrundrisses, sondern vor einem von der Stirnwand (14) des Korbes (11) gefällten Lot angeordnet ist.

12. Einkaufswagen nach einem der Ansprüche 1 bis 11, dadurch **gekennzeichnet,** daß die Breite der wannenförmigen Vertiefung (22) in etwa gleich oder kleiner ist, als die Breite des vorderen Endes (6) des Fahrgestelles (2).

13. Einkaufswagen nach einem der Ansprüche 1 bis 12, dadurch **gekennzeichnet,** daß die wannenförmige Vertiefung (22) aus Blech, und/oder aus Kunststoff oder aus einem engmaschigen Drahtgitter besteht.

14. Einkaufswagen nach einem der Ansprüche 1 bis 13, dadurch **gekennzeichnet,** daß die geradlinige Auflagekante eines auf der Ablage (16) und und der wannenförmigen Vertiefung (22) abgestellten Gegenstandes im waagrechten Zustand des Einkaufswagens eine in Schieberichtung geneigte Lage von wenigstens 10° einnimmt.

15. Einkaufswagen nach einem der Ansprüche 1 bis 14, dadurch **gekennzeichnet,** daß ein an sich bekannter, von der Stirnwand (14) des Korbes (11) in Schieberichtung sich erstreckender U-Bügel (24) direkt über der wannenförmigen Vertiefung (22) angeordnet ist.

## Claims

1. A shopping trolley (1) for transporting articles available at DIY supermarkets, such as panels, containers, rolls of wallpaper and the like, consisting of an undercarriage (2) and a basket (11) arranged on the undercarriage (2), with a pushing device (15) and with a shelf (16), arranged on one long side of the shopping trolley (1) and equipped with a limit stop (17) projecting upwards at the side, for advantageously receiving panel-shaped material, which is supported in a position inclined in the pushing direction on both the shelf (16), which forms a first point of support, and on a second point of support, which is located at the front end (6) of the undercarriage (2), **characterised** in that the second point of support is formed by a trough-shaped recess (22).

2. A shopping trolley according to Claim 1, **characterised** in that the base (23) of the trough-shaped recess (22) has an inclined position in the pushing direction of the shopping trolley (1).

3. A shopping trolley according to Claim 2, **characterised** in that the supporting surface (16') of the shelf (16) and the base (23) of the trough-shaped recess (22) lie in a common plane (33).

4. A shopping trolley according to Claim 2, **characterised** in that the base (23) is formed as a rectangular structure, the portion (23') which is inclined forwards forming a supporting surface and the portion (23'') which projects obliquely upwards forming a front limit stop (19) for material (30, 31) which is to be placed thereon.

5. A shopping trolley according to any one of Claims 1 to 4, **characterised** in that part of the trough-shaped recess (22) is formed by limit stops (19, 20, 21).

6. A shopping trolley according to any one of Claims 1 to 5, **characterised** in that the front limit stop (19) is arranged higher than the rear limit stop (20).

7. A shopping trolley according to any one of Claims 1 to 6, **characterised** in that the front and rear limit stops (19, 20) are arranged either higher than or at the same height as the upper boundary (7) of the undercarriage frame (3).

8. A shopping trolley according to any one of Claims 1 to 7, **characterised** in that the base (23) of the trough-shaped recess (22) is arranged lower than the upper boundary (7) of the undercarriage frame (3).

9. A shopping trolley according to any one of Claims 1 to 8, **characterised** in that the trough-shaped recess (22) is arranged outside the swivelling region (10) of the front travelling wheels (9).

10. A shopping trolley according to any one of Claims 1 to 9, **characterised** in that the trough-shaped recess (22) is arranged between the cross piece (9'), which carries the front travelling wheels (9), and the cross connection (6') at the front end (6) of the undercarriage (2).

11. A shopping trolley according to any one of Claims 1 to 10, **characterised** in that at least part of the outline of the trough-shaped recess (22) is not arranged within the outline of the basket, but in front of a perpendicular line drawn by the front wall (14) of the basket (11).

12. A shopping trolley according to any one of Claims 1 to 11**, characterised** in that the width of the trough-shaped recess (22) is approximately the same as or smaller than the width of the front end (6) of the undercarriage (2).

13. A shopping trolley according to any one of Claims 1 to 12, **characterised** in that the trough-shaped recess (22) consists of sheet metal, and/or of synthetic material or of close-meshed wire grating.

14. A shopping trolley according to any one of Claims 1 to 13, **characterised** in that the straight supporting edge of an article placed on the shelf (16) and in the trough-shaped recess (22) takes up a position inclined in the pushing direction by at least 10° when the shopping trolley is in the horizontal state.

15. A shopping trolley according to any one of Claims 1 to 14, **characterised** in that a U-shaped bracket (24), which is known per se and extends from the front wall (14) of the basket (11) in the pushing direction, is arranged directly above the trough-shaped recess (22).

## Revendications

1. Chariot à emplettes (1) pour transporter des articles disponibles dans des supermarchés du bâtiment, tels que des plaques, des conteneurs, des rouleaux de moquette et objets similaires, comprenant un châssis (2) et un panier (11) installé sur le châssis (2), un dispositif de poussée (15) et un reposoir (16) installé sur un côté longitudinal du chariot à emplettes (1) et équipé d'une butée (17) saillant latéralement vers le haut, pour recevoir préférentiellement une marchandise en forme de plaques qui, dans une position inclinée dans la direction de poussée, est appliquée tant contre le reposoir (16) formant une première zone d'appui, que contre une seconde zone d'appui située à l'extrémité antérieure (6) du châssis (2), caractérisé par le fait que la seconde zone d'appui est formée par une niche (22) en forme d'auge.

2. Chariot à emplettes selon la revendication 1, caractérisé par le fait que le fond (23) de la niche (22) en forme d'auge prend une position inclinée vers la direction de poussée du chariot à emplettes (1).

3. Chariot à emplettes selon la revendication 2, caractérisé par le fait que la surface d'appui (16') du reposoir (16) et le fond (23) de la niche (22) en forme d'auge sont situés dans un plan commun (33).

4. Chariot à emplettes selon la revendication 2, caractérisé par le fait que le fond (23) est configuré comme une structure rectangulaire, la région (23') inclinée vers l'avant formant une surface d'appui, et la région (23'') ascendant à l'oblique formant un arrêtoir antérieur (19) pour une marchandise (30, 31) à déposer.

5. Chariot à emplettes selon l'une des revendications 1 à 4, caractérisé par le fait qu'une partie de la niche (22) en forme d'auge est formée par des arrêtoirs (19, 20, 21).

6. Chariot à emplettes selon l'une des revendications 1 à 5, caractérisé par le fait que l'arrêtoir antérieur (19) est disposé plus haut que l'arrêtoir postérieur (20).

7. Chariot à emplettes selon l'une des revendications 1 à 6, caractérisé par le fait que les arrêtoirs antérieur et postérieur (19, 20) sont disposés soit plus haut, soit à la même hauteur que la délimitation supérieure (7) du cadre (3) du châssis.

8. Chariot à emplettes selon l'une des revendications 1 à 7, caractérisé par le fait que le fond (23) de la niche (22) en forme d'auge est disposé plus bas que la délimitation supérieure (7) du cadre (3) du châssis.

9. Chariot à emplettes selon l'une des revendications 1 à 8, caractérisé par le fait que la niche (22) en forme d'auge est située à l'extérieur de la zone de pivotement (10) des roulettes antérieures (9).

10. Chariot à emplettes selon l'une des revendications 1 à 9, caractérisé par le fait que la niche (22) en forme d'auge est intercalée entre la pièce d'entretoisement (9') portant les roulettes antérieures (9), et la solidarisation transversale (6') de l'extrémité antérieure (6) du châssis (2).

11. Chariot à emplettes selon l'une des revendications 1 à 10, caractérisé par le fait que la niche (22) en forme d'auge est disposée, au moins par une partie de sa configuration d'ensemble, non pas à l'intérieur de la configuration d'ensemble du panier, mais devant une perpendiculaire abaissée à partir de la paroi frontale (14) du panier (11).

12. Chariot à emplettes selon l'une des revendications 1 à 11, caractérisé par le fait que la largeur de la niche (22) en forme d'auge est sensiblement égale ou inférieure à la largeur de l'extrémité antérieure (6) du châssis (2).

13. Chariot à emplettes selon l'une des revendications 1 à 12, caractérisé par le fait que la niche (22) en forme d'auge consiste en de la tôle et/ou en une matière plastique, ou bien en un grillage métallique à maillage étroit.

14. Chariot à emplettes selon l'une des revendications 1 à 13, caractérisé par le fait que l'arête rectiligne d'appui d'un objet déposé sur le reposoir (16) et dans la niche (22) en forme d'auge prend, à l'état horizontal du chariot à emplettes, une position inclinée d'au moins 10° dans la direction de poussée.

15. Chariot à emplettes selon l'une des revendications 1 à 14, caractérisé par le fait qu'un étrier en U (24) connu par lui-même, s'étendant dans la direction de poussée à partir de la paroi frontale (14) du panier (11), est disposé directement au-dessus de la niche (22) en forme d'auge.
